# EUROPÄISCHE PATENTSCHRIFT

(11) **EP 2 707 854 B1**
(45) Veröffentlichungstag und Bekanntmachung des Hinweises auf die Patenterteilung: **29.07.2015**
(21) Anmeldenummer: 12729854.5
(22) Anmeldetag: 27.04.2012
(51) Int. Cl.: B60K 35/00, G06T 11/20

(54) **VERFAHREN ZUM BEREITSTELLEN EINER DARSTELLUNG EINES GEGENSTANDES AUF EINER KRAFTFAHRZEUG-ANZEIGEEINRICHTUNG**
METHOD FOR MAKING AVAILABLE A DISPLAY OF AN OBJECT ON A MOTOR VEHICLE DISPLAY DEVICE
PROCÉDÉ DE PRÉPARATION D'UNE REPRÉSENTATION D'UN OBJET SUR UN DISPOSITIF D'AFFICHAGE D'UN VÉHICULE À MOTEUR

(30) Priorität: 10.05.2011 DE 102011101004
(43) Veröffentlichungstag der Anmeldung: 19.03.2014
(73) Patentinhaber: Audi AG, 85045 Ingolstadt (DE)
(72) Erfinder: TREIBER, Alexander, S., 85049 Ingolstadt (DE); HUMMEL, Stephan, 85049 Ingolstadt (DE)
(74) Vertreter: Brandt, Kai
(86) Internationale Anmeldenummer: PCT/EP2012/001807
(87) Internationale Veröffentlichungsnummer: WO 2012/152384

(56) Entgegenhaltungen:
- EP-A1- 1 195 673
- DE-A1- 10 144 783
- DE-A1-102009 007 836
- DE-A1-102009 023 203
- DE-A1-102009 023 867

## Beschreibung

Die Erfindung betrifft ein Verfahren zum Bereitstellen einer Darstellung eines Gegenstandes auf einer Anzeigeeinrichtung eines Kraftfahrzeugs.

Man geht zunehmend dazu über, in Kraftfahrzeugen bisher körperlich bereitgestellte Instrumente durch virtuelle Instrumente zu ersetzen, die auf einer Anzeigeeinrichtung eines Kraftfahrzeugs dargestellt werden. Ein Beispiel hierfür ist der Tachometer. Um den Effekt einer Vertrautheit zu erzielen, wird auf der Anzeigeeinrichtung nicht abstrakt die Geschwindigkeit angezeigt, sondern es wird tatsächlich gegenständlich ein Tachometer dargestellt. Ein solcher Tachometer weist eine Umrandung nach Art des bisherigen Gehäuses in der Armatur auf. In seiner Mitte befindet sich z. B. eine Anzeigefläche mit einer Skala, bezüglich der sich ein Zeiger bewegt oder Anzeigeflächen für fahrzeugrelevante Statusinformationen ("Warnlampen"), Fahrerassistenzsysteme, Infotainment oder Navigation.

Durch die Nutzung einer Anzeigeeinrichtung, etwa eines Bildschirms, eines LCD- oder LED-Displays, eines Plasmadisplays o.ä., welche elektronisch ansteuerbar ist, und bei der eine Darstellung sich aus einer Vielzahl von Bildpunkten zusammensetzt, ließen sich an sich Computertechniken jeglicher Art bei der Darstellung von Gegenständen einsetzen. So beschreibt die EP 2 154 648 A1 eine Mehrzahl von Möglichkeiten, eine Bilddarstellung zu ändern, unter Anderem die Darstellung bezüglich einer Bildebene zu kippen, aber auch drehen usw.

Die DE 10 2009 007836 A1 zeigt ein Kombi-Instrument für einen Kraftwagen mit einer frei programmierbaren Anzeigeeinrichtung, mittels welcher betriebsbezogene Informationen in Abhängigkeit von einem vorgewählten Fahrmodus angezeigt werden können. Es können dabei verschiedene Informationen - je nach gewähltem Fahrmodus - im Kombi-Instrument angezeigt werden, wobei beispielsweise Zusatzinformationen über die CO₂-Emissionen des Kraftwagens innerhalb eines virtuell dargestellten Drehzahlmessers eingeblendet oder ausgeblendet werden.

Die EP 1 195 673 A1 zeigt ebenfalls eine Anzeigeeinrichtung für einen Kraftwagen, insbesondere für ein Multimediasystem eines Kraftwagens. Mittels des Anzeigeeinrichtung werden mehrere unterschiedliche Piktogramme (Icons) dargestellt. Beim Anwählen von einem der Piktogramme wird dieses vergrößert dargestellt, wobei die anderen, also die nicht ausgewählten Piktogramme, auf der Anzeigeeinrichtung verschoben werden, um für die vergrößerte Darstellung des ausgewählten Piktogramms den erforderlichen Platza auf der Anzeigeeinrichtung bereitzustellen. Zusätzlich können die nicht ausgewählten Piktogramme auch verkleinert werden.

Die DE 101 44 783 A1 zeigt eine als Tachometer ausgebildete Anzeigeeinrichtung für einen Kraftwagen. Ein jeweiliger Bereich, in welchem sich augenblicklich eine Tachonadel befindet, kann dabei vergrößert werden, um in diesem Bereich eine Tachoskala und die Tachonadel vergrößert und somit besser ablesbar darzustellen.

Die DE 10 2009 023 203 A1 zeigt ebenfalls eine Anzeigeeinrichtung für einen Kraftwagen, mittels welcher bei einer perspektivischen Darstellung von anzuzeigenden Informationen eine besonders gut ablesbare Geometrie gewählt wird.

In der Praxis nutzt man in einem Kraftfahrzeug die Möglichkeiten der Computertechnik lediglich sehr eingeschränkt: die Anzeigeeinrichtung des Kraftfahrzeugs arbeitet häufig auch während der Fahrt. Hier ist es dann aber wesentlich, dass die Darstellung vom Fahrer als angenehm, leicht zu erfassen etc. angesehen wird. Es gibt auch durch Gesetz und Norm Vorgaben, was die Möglichkeiten für solche Darstellungen angeht.

Gerne würde man eine Displayfläche in einem Kraftfahrzeug (also die Anzeigeeinrichtung) flexibler nutzen. Die Anzeigeeinrichtung soll Teil eines frei programmierbaren Kombünstruments sein, das sowohl eine Vielfalt von Bedienmöglichkeiten bietet, als auch gleichzeitig einfach bedienbar ist.

Es ist die Aufgabe der vorliegenden Erfindung, ein Verfahren zum Bereitstellen einer Darstellung eines Gegenstands auf einer Anzeigeeinrichtung eines

Kraftfahrzeugs zu offenbaren, das die Zahl der Möglichkeiten der Nutzung der Anzeigeeinrichtung eines Kraftfahrzeugs auch in Anbetracht von Komforterfordernissen, Sicherheitserfordernissen und von Gesetzen und Bestimmungen erhöht.

Die Aufgabe wird durch ein Verfahren mit den Merkmalen gemäß Patentanspruch 1 gelöst.

Im Rahmen des erfindungsgemäßen Verfahrens wird somit zunächst eine Grundform des Gegenstandes dargestellt. Sodann erfolgt aber eine Änderung der Darstellung, durch die eine Drehung, Kippung und/oder Verschiebung nur eines ersten Teils des Gegenstands (bezüglich der Ebene der Anzeigeeinrichtung) simuliert wird, also eine virtuelle Drehung, wobei zu dem übrigen, zweiten Teil des Gegenstands eine Darstellung auf Grundlage der Grundform zumindest bereichsweise aufrecht erhalten bleibt.

Die Erfindung zeichnet sich dabei dadurch aus, dass der erste Teil einen Rahmen um den zweiten Teil ausgebildet und lediglich der erste Teil um eine Koppelachse virtuell gedreht wird, wohingegen der zweite Teil unverändert bleibt und lediglich wegen der Drehung des ersten Teils über das zweite Teil hinweg in einem Bereich abgeschnitten wird und dabei in seinen ursprünglichen Proportionen bestehen bleibt, wobei der erste Teil orthogonal zu der Koppelachse und innerhalb der Ebene der Anzeigeeinrichtung gestaucht wird.

Die Erfindung beruht auf der Erkenntnis, dass das Drehen eines Teils des Gegenstandes dazu führt, dass die Darstellung weniger Platz auf der Anzeigeeinrichtung einnimmt, sodass der gewonnene Platz für etwas anderes genutzt werden kann, während aber gleichzeitig im Bereich des zweiten Teils des Gegenstands dafür gesorgt ist, dass sich der Fahrzeugführer nicht die Drehung vorstellen muss, sondern ein unverändertes Bild erhält. Durch die Zweiteilung des Gegenstands in einen zu drehenden und in einen nicht zu drehenden Teil - man kann sich dies auch so vorstellen, als dass der nächste Gegenstand gedreht wird und dann ein Teil von ihm wieder zurückgedreht wird - wird ein guter Kompromiss erhalten zwischen dem Wunsch, Platz für die Darstellung einzusparen, und andererseits die Darstellung möglichst wenig zu ändern.

Im Falle der Anzeige von Warnicons in diesem Anzeigebereich kann so dem gesetzlichen Erfordernis Rechnung getragen werden, dass der Benutzer ein unverändertes Bild erhält, da die entsprechenden Symbole nicht verändert - also auch nicht verzerrt - werden dürfen.

Bei einer bevorzugten Ausführungsform der Erfindung wird bei der Änderung der Darstellung der zweite Teil so gezeigt, als sei er über eine Koppelachse mit dem gedrehten ersten Teil verbunden. Auf diese Weise wird der Gegenstand wie eine Art Mobile behandelt, wobei die Bewegung von den Teilen im Raum (bzw. beim zweiten Teil dessen Nichtbewegung) dann zweidimensional dargestellt wird. Dies hat den Vorteil, dass die virtuelle Darstellung die Anmutung eines tatsächlichen Gegenstandes hervorbringt.

Bei einer bevorzugten Ausführungsform der Erfindung hängt die Änderung der Darstellung von einem Betriebszustand des Kraftfahrzeugs ab, der bevorzugt auf eine von der Anzeigeeinrichtung selbst verschiedene Funktionseinheit des Kraftfahrzeugs oder das gesamte Kraftfahrzeug bezogen ist, beispielsweise dessen Geschwindigkeit betrifft. Auf diese Weise kann beispielsweise die Einteilung in den ersten und zweiten Teil dergestalt abhängig vom Betriebszustand erfolgen, dass für den Fahrer im jeweiligen Betriebszustand notwendige Informationen überhaupt oder ausreichend gut dargestellt werden, während andere Informationen durch die Drehung in den Hintergrund geraten.

Bei einer bevorzugten Variante dieser Ausführungsform hängt das Ausmaß der simulierten Drehung des Gegenstandes von einem Betriebszustand des Kraftfahrzeugs ab, wobei er bevorzugt unmittelbar von einem Betriebsparameter abhängt. Beispielsweise kann bei einem Kraftfahrzeug mit Schaltgetriebe der Drehzahlmesser bei niedrigen und hohen Drehzahlen in der Grundform dargestellt werden, und in Zwischenbereichen mit teilweiser Drehung des ersten Teils. Der Drehzahlmesser klappt dann gewissermaßen auf der Anzeigeeinrichtung etwas weg, um Platz für andere Darstellungen zu machen, wenn die Information über die Drehzahl nicht äußerst wichtig ist. Genauso kann z. B. auch eine Anzeige zum Füllstand eines Kraftstofftanks bei mehr als einem Drittel gefüllten Kraftstofftank in einem Teil gedreht werden, sonst aber nicht.

Bei einer zweiten Variante der Ausführungsform, bei der die Änderung der Darstellung von einem Betriebszustand des Kraftfahrzeugs abhängig ist, bleibt die Grundform zum zweiten Teil des Gegenstands in einem Bereich aufrecht erhalten, der von dem Betriebszustand des Kraftfahrzeugs abhängig gewählt ist. Beispielsweise kann bei einem Tachometer das Tachometergehäuse gedreht werden und die Geschwindigkeitsskala nicht. Wenn die Geschwindigkeitsskala aber nur in einem Bereich dargestellt wird, wird immer der Bereich dargestellt, der die Geschwindigkeit umfasst, mit der das Kraftfahrzeug gegenwärtig fährt. So können bei niedriger Geschwindigkeit des Kraftfahrzeugs die oberen Bereiche der Skala ausgeblendet werden, bei höherer Geschwindigkeit dann die unteren Bereiche. Insbesondere die Anpassung der Bereiche in Abhängigkeit von einem Betriebszustand des Kraftfahrzeugs kann dadurch erfolgen, dass wenn der zweite Teil so gezeigt wird, als sei er über eine Koppelachse mit dem gedrehten ersten Teil verbunden, diese Koppelachse vom Betriebszustand des Kraftfahrzeugs abhängig gewählt wird.

Wie bereits ausgeführt umfasst oder ist der Gegenstand ein Anzeigeinstrument zum Anzeigen eines Betriebszustands. Der erste Teil des Gegenstands bildet hierbei einen offenen und geschlossenen Rahmen und der zweite Teil des Gegenstands einen Anzeigebereich des Gegenstands, oder beide Teile können Teile einer Anzeige bilden (z. B. ein virtueller analoger Tachometer im äußeren Teil, der über eine Digitalanzeige desselben Geschwindigkeitswerts im inneren, zweiten Teil verfügt) oder zwei voneinander unabhängige Informationen darstellen (z. B. ein virtueller analoger Drehzahlmesser, der in seinem inneren verschiedene Fahrzeugstatusinformationen in Form von Icons darstellt). Die Realisierung der Erfindung bei der Darstellung von Anzeigeinstrumenten trägt der Tatsache Rechnung, dass es wünschenswert und teilweise gesetzlich vorgeschrieben ist, dass bei einer Darstellung eines Anzeigeinstruments auf einer Anzeigeeinrichtung bestimmte Seitenverhältnisse gegeben sein oder konstant bleiben sollen. Somit wird derjenige Bereich gedreht, auf den sich ein solcher Wunsch oder eine solche Vorschrift nicht bezieht, und der andere Teil wird unverändert aufrecht erhalten.

In vorteilhafter Weise nimmt die Darstellung des Gegenstands durch die Änderung der Darstellung weniger Platz auf der Anzeigeeinrichtung ein als die Grundform. Der so gewonnene Platz wird dann zum Bereitstellen einer weiteren Darstellung genutzt. Auf diese Weise wird die Anzeigeeinrichtung optimal und flexibel nutzbar.

Nachfolgend wird eine bevorzugte Ausführungsform der Erfindung unter Bezug auf die Zeichnung näher beschrieben in der
- Fig. 1: ein Drehen der Darstellung eines Gegenstands gemäß dem Stand der Technik veranschaulicht; und
- Fig. 2: ein Drehen eines Teils eines Gegenstands veranschaulicht, wie es bei der Erfindung vorgesehen ist.

Auf einer Anzeigeeinrichtung 10, die eine Vielzahl von Bildpunktelementen aufweist, die jeweils das Aussehen eines Bildpunktes in einem Bild bestimmen, wird in einem Kraftfahrzeug ein in den Figuren nur symbolisch gezeigter Tachometer dargestellt. Der Tachometer umfasst als ersten Teil einen Rahmen 12 und als zweiten Teil ein Anzeigefeld 14, auf dem z. B. die in der Figur nicht gezeigte Skala und dazugehörige Zeiger dargestellt sind.

Soll nun auf der Anzeigeeinrichtung 10 Platz gewonnen werden, so kann der Tachometer virtuell gedreht werden: Sowohl der Rahmen 12 wird zum Rahmen 12' gedreht, als auch das Anzeigefeld 14 wird zum Anzeigefeld 14' gedreht.

Das Anzeigefeld 14' ist dadurch gekennzeichnet, dass wegen der Drehung eine Stauchung in der einen Richtung erfolgt, wohingegen in der anderen Richtung keine Stauchung erfolgt. Dies lässt sich anhand der eingezeichneten Quadrate erkennen, beispielsweise am Quadrat 16, das zum Rechteck 16' gestaucht wird.

Es ist nicht wünschenswert, dass sich bei einem Tachometer das Anzeigefeld mit der Skala dreht und dieser gestaucht wird. An sich ist es aber wünschenswert, durch eine virtuelle Drehung Platz auf der Anzeigeeinrichtung 10 zu gewinnen.

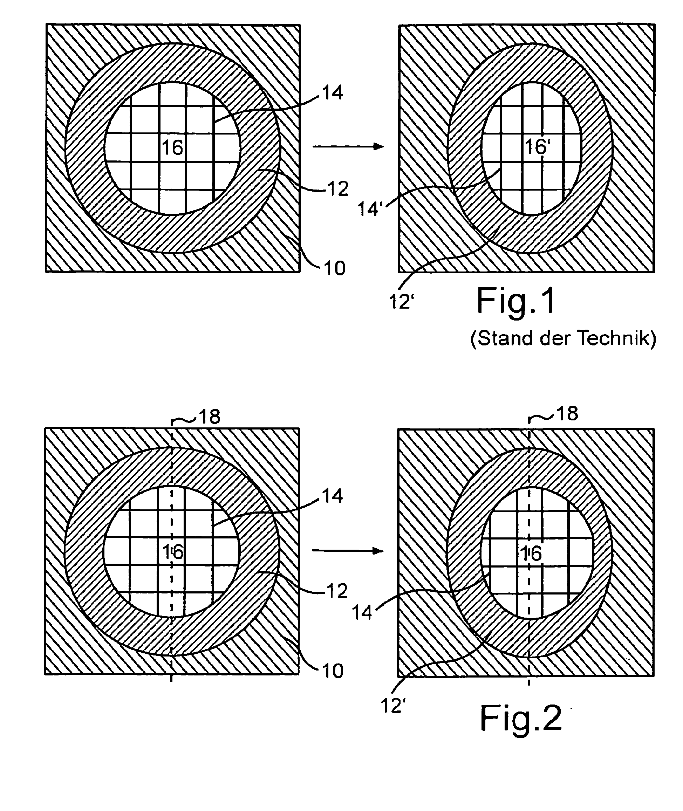

Aus diesem Grund wird bei der Erfindung wie folgt vorgegangen: Der Rahmen 12 und das Anzeigefeld14 werden als zwei voneinander unabhängige Teile angesehen, die über eine Koppelachse 18 miteinander gekoppelt sind. Man kann sich dies vorstellen wie bei einem Mobile, bei dem eine innere Kreisscheibe von einem äußeren Ring umgeben ist, der gegenüber dieser drehbar ist. Nun wird virtuell lediglich der äußere Ring, also der Rahmen 12 zum Rahmen 12' gedreht, wohingegen das Anzeigefeld 14 unverändert bleibt und lediglich wegen der Drehung des äußeren Rings über ihn hinweg in seinen in Fig. 2 linken Teil etwas abgeschnitten wird.

Man kann sich dies im Bild des Mobiles so vorstellen, als dass gegenüber dem Betrachter der Teil 14 stehen bleibt, wohingegen sich der äußere Ring 12 relativ zum Betrachter dreht.

Auf diese Weise bleibt bei dem Tachometer das Anzeigefeld in den ursprünglichen Proportionen bestehen, das Quadrat 16 bleibt also das Quadrat 16.

Gegebenenfalls kann das Ausmaß der Drehung oder auch die Richtung der Drehung von der Art und dem Umfang des im Anzeigefeld 10 darzustellenden Inhalts abhängig gemacht werden, gegebenenfalls auch von der Fahrgeschwindigkeit abhängig gemacht werden. Dadurch, dass das Anzeigefeld 14 durch die Drehung in seinem linken Bereich abgeschnitten wird, empfiehlt es sich, dies nur bei hohen Geschwindigkeiten zu tun, bei dem lediglich der rechte Teil benötigt wird. Bei niedrigen Geschwindigkeiten kann die Drehung kleiner ausfallen oder gar nicht vorgenommen werden, oder es kann in Gegenrichtung gedreht werden, so dass dann der rechte Teil des Anzeigefeldes 14 abgeschnitten wird. Ansonsten kann Wünschen der Bedienperson Rechnung getragen werden, beispielsweise die Drehung erfolgen, wenn bestimmte Menüpunkte ausgewählt werden, bestimmte Icons aktiviert werden etc.

Zusätzlich zu einer Drehung kann auch eine Kippung oder Verschiebung vorgesehen sein.

Der vorgeschlagene Mechanismus kann überall in dieser Anzeigeeinrichtung 10 (Display) eingesetzt werden, wo bei zwei übereinanderliegenden, jeweils Informationen bereitstellenden Anzeigen die eine gegenüber der anderen verdreht werden soll.

## Patentansprüche

1. Verfahren zur Darstellung eines Anzeigeinstruments zum Anzeigen eines Betriebszustands auf einer Anzeigeeinrichtung (10) eines Kraftfahrzeugs, bei dem zunächst eine Grundform des Anzeigeinstruments dargestellt wird und sodann eine Änderung der Darstellung erfolgt, durch die eine Drehung nur eines ersten Teils (12) des Anzeigeinstruments simuliert wird, wobei zu dem übrigen, zweiten Teil (14) des Anzeigeinstruments eine Darstellung auf Grundlage der Grundform zumindest bereichsweise aufrecht erhalten bleibt, **dadurch gekennzeichnet, dass**
der erste Teil (12) einen Rahmen um den als Anzeigefeld ausgebildeten zweiten Teil (14) des Anzeigeinstruments ausbildet, und lediglich der erste Teil (12) um eine in der Ebene des zweiten Teils (14) liegende Koppelachse (18) virtuell gedreht wird, wohingegen der zweite Teil (14) unverändert bleibt und lediglich wegen der Drehung des ersten Teils (12) über den zweiten Teil (14) hinweg in einem Bereich abgeschnitten wird und ansonsten in seinen ursprünglichen Proportionen bestehen bleibt, wobei der erste Teil (12) orthogonal zu der Koppelachse (18) und innerhalb der Ebene der Anzeigeeinrichtung (10) gestaucht wird, sodass die Darstellung des Anzeigeinstruments durch die Änderung weniger Platz auf der Anzeigeeinrichtung (10) einnimmt.

2. Verfahren nach Anspruch 1, **dadurch gekennzeichnet, dass** die Änderung der Darstellung von einem Betriebszustand des Kraftfahrzeugs abhängig ist.

3. Verfahren nach Anspruch 2, **dadurch gekennzeichnet, dass** das Ausmaß der simulierten Drehung des Anzeigeinstruments von einem Betriebszustand des Kraftfahrzeugs abhängig ist, vorzugsweise unmittelbar von einem Betriebsparameter des Kraftfahrzeugs abhängig ist.

4. Verfahren nach Anspruch 2 oder 3, **dadurch gekennzeichnet, dass** die Grundform des zweiten Teils (14) in einem Bereich aufrecht erhalten bleibt, der von dem Betriebszustand des Kraftfahrzeugs abhängig gewählt ist.

5. Verfahren nach einem der vorhergehenden Ansprüche, **dadurch gekennzeichnet, dass** die Koppelachse (18) vom Betriebszustand des Kraftfahrzeugs abhängig gewählt ist.

6. Verfahren nach einem der vorhergehenden Ansprüche, **dadurch gekennzeichnet, dass** der erste Teil (12) des Anzeigeinstruments einen offenen oder geschlossenen Rahmen um den zweiten Teil (14) bildet.

7. Verfahren nach einem der vorhergehenden Ansprüche, **dadurch gekennzeichnet, dass** der durch die Änderung der Darstellung des Anzeigeinstruments gewonnene Platz zum Bereitstellen einer weiteren Darstellung genutzt wird.

## Claims

1. Method for presenting a display instrument for displaying an operating state on a display device (10) of a motor vehicle, in which firstly a basic shape of the display instrument is presented, and then the display is changed, by means of which change a rotation only of the first part (12) of the display instrument is simulated, a presentation based on the basic shape being maintained at least in some regions with regard to the other, second part (14) of the display instrument, **characterised in that** the first part (12) forms a frame around the second part (14), which is in the form of a display panel, of the display instrument, and only the first part (12) is rotated virtually about a coupling axis (18) which is located in the plane of the second part (14), whereas the second part (14) remains unchanged and is merely cropped in one region due to the rotation of the first part (12) over the second part (14) and otherwise retains its original proportions, the first part (12) being compressed orthogonally to the coupling axis (18) and within the plane of the display device (10), such that the presentation of the display instrument takes up less space on the display device (10) due to the change.

2. Method according to claim 1, **characterised in that** the change in the presentation is dependent on an operating state of the motor vehicle.

3. Method according to claim 2, **characterised in that** the extent of the simulated rotation of the display instrument is dependent on an operating state of the motor vehicle, preferably directly dependent on an operating parameter of the motor vehicle.

4. Method according to either claim 2 or claim 3, **characterised in that** the basic shape of the second part (14) is maintained in a region which is selected according to the operating state of the motor vehicle.

5. Method according to any of the preceding claims, **characterised in that** the coupling axis (18) is selected according to the operating state of the motor vehicle.

6. Method according to any of the preceding claims, **characterised in that** the first part (12) of the display instrument forms an open or closed frame around the second part (14).

7. Method according to any of the preceding claims, **characterised in that** the space which is obtained by means of the change in the presentation of the display instrument is used to provide a further display.

## Revendications

1. Procédé de représentation d'un instrument d'affichage pour afficher un état de fonctionnement sur un dispositif d'affichage (10) d'un véhicule automobile, dans lequel on représente tout d'abord une forme fondamentale de l'instrument d'affichage et, ensuite, il se produit une modification de la représentation, par laquelle une rotation de seulement une première partie (12) de l'instrument d'affichage est simulée, dans lequel, en ce qui concerne la seconde partie restante (14) de l'instrument d'affichage, une représentation sur la base de la forme fondamentale reste maintenue au moins par zones,
**caractérisé en ce que** :
la première partie (12) forme un cadre autour de la
seconde partie (14) de l'instrument d'affichage formée comme zone d'affichage et seule la première partie (12) est soumise à une rotation virtuelle autour d'un axe de couplage (18) qui se trouve dans le plan de la seconde partie (14), tandis que la seconde partie (14) reste non modifiée et est simplement sectionnée en une zone en raison de la rotation de la première partie (12) sur la seconde partie (14) et reste autrement dans ses proportions initiales, dans lequel la première partie (12) est comprimée orthogonalement à l'axe de couplage (18) et à l'intérieur du plan du dispositif d'affichage (10) de sorte que la représentation de l'instrument d'affichage prenne, en raison de la modification, moins de place sur le dispositif d'affichage (10).

2. Procédé selon la revendication 1, **caractérisé en ce que** la modification de la représentation dépend d'un état de fonctionnement du véhicule automobile.

3. Procédé selon la revendication 2, **caractérisé en ce que** le degré de rotation simulée de l'instrument d'affichage dépend d'un état de fonctionnement du véhicule automobile, de préférence directement d'un paramètre de fonctionnement du véhicule automobile.

4. Procédé selon la revendication 2 ou la revendication 3, **caractérisé en ce que** la forme fondamentale de la seconde partie (14) reste maintenue dans une zone qui est choisie en fonction de l'état de fonctionnement du véhicule automobile.

5. Procédé selon l'une quelconque des revendications précédentes, **caractérisé en ce que** l'axe de couplage (18) est choisi en fonction de l'état de fonctionnement du véhicule automobile.

6. Procédé selon l'une quelconque des revendications précédentes, **caractérisé en ce que** la première partie (12) de l'instrument d'affichage forme un cadre ouvert ou fermé autour de la seconde partie (14).

7. Procédé selon l'une quelconque des revendications précédentes, **caractérisé en ce que** la place gagnée par la modification de la représentation de l'instrument d'affichage est mise à profit pour effectuer une autre représentation.
